# EUROPEAN PATENT SPECIFICATION

(11) **EP 0 649 880 B1**
(45) Date of publication and mention of the grant of the patent: **12.01.2000**
(21) Application number: 94420278.7
(22) Date of filing: 20.10.1994
(51) Int. Cl.: C09B 45/00, G11B 7/24

(54) **Metallized azo-ether dyes for optical recording layers**
Metallisierte Azo-ether-farbstoffe für optische Aufzeichnungsschichten
Colorants éther-azoiques métallisés pour couches d'enregistrement optique

(30) Priority: 21.10.1993 US 140641
(43) Date of publication of application: 26.04.1995
(73) Proprietor: EASTMAN KODAK COMPANY, Rochester, New York 14650-2201 (US)
(72) Inventor: Chapman, Derek D., c/o EASTMAN KODAK COMPANY, Rochester, New York 14650-2201 (US); Goswami, Ramanuj, c/o EASTMAN KODAK COMPANY, Rochester, New York 14650-2201 (US); Kovacs, Csaba Andras, c/o EASTMAN KODAK COMPANY, Rochester, New York 14650-2201 (US)
(74) Representative: Parent, Yves

(56) References cited:
- EP-A- 0 576 036
- US-A- 4 495 098

## Description

The present invention relates to dyes. The dyes are useful in optical recording layers and elements.

Optical recording materials for storing information are known. One of the currently popular forms of optical storage of information is the compact disk or CD. Digital information is stored in the form of low specular reflectivity marks or pits on an otherwise reflective background. In this format, the optical information is most often in the form of read only memory or ROM. Optical information is not usually recorded in real time but rather is produced by press molding. In a typical process, the optical recording substrate is first press molded with a master containing the digital information to be reproduced. Thus, the formed information is overcoated with a reflective layer and then with an optional protective layer. In those areas having the deformations or pits, the specular reflectivity is lower than in those areas not having the deformations.

It is desirable to produce optical recording media which, when recorded in real time, produces a record that mimics CD-ROM on read out. Read out is at 780 nm. In this manner, information can be added to the CD and the CD can be used on a conventional CD player.

One recently disclosed system of this type is the so called "Photo CD". In this system, conventional photographic film is first processed in a conventional manner. Then, the images from the film are digitized and the digital information is recorded in a CD readable form on an optical recording material. Images can then be played back by means of a CD type player on a conventional television. Since the Photo CD is not recorded to its capacity in a single session, or played back only once, long time multi session recording and play back capacity is needed. Thus, the need for very stable recording materials.

One method for forming a recordable element that mimics conventional injection pressed CD elements is to provide a support having thereon, in order, a layer of a dye that absorbs recording radiation and generates the needed change in the specular reflectivity and a reflective layer. Exposure of the recording layer through the support by the recording beam heats the recording layer to an extent that it is said that the surface of the heat deformable support just adjacent to the recording layer surface is deformed, and the dye or dyes are changed to reduce specular reflectivity. Materials of this type are described in US-A-4,940,618; European Patent Application 0,353,393 and Canadian Patent Application 2,005,520.

Commercially useful materials of the type described in these references have stringent requirements. One of these requirements is the long term stability of the recorded information on the Photo CD disks. Therefore, the materials used for the Photo CD disks must have very good light stability.

US-A-4 495 098 shows the following dye : 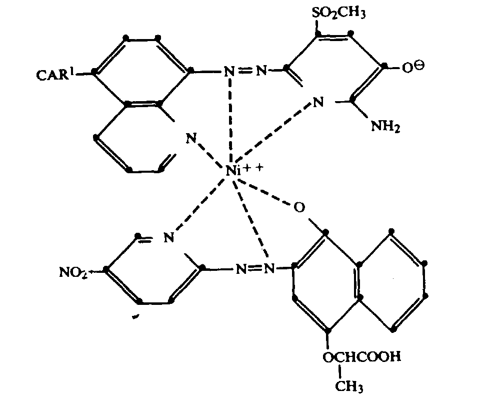 see structure (20), columns 19 and 20.

The present invention provides a metallized azo-ether dye comprising an azo group linking a substituted 3-hydroxy-pyridine nucleus to a phenyl nucleus wherein the phenyl nucleus has an alkoxy or thioether substituent at its 2-position. The dyes have good indices of refraction and excellent light stability.

The invention also provides an optical recording element comprising, in the following order, a light transmitting substrate a recording layer containing a dye and a light reflective layer wherein the dye is a metallized azo-ether dye according to this invention.

The invention further provides a method for recording optical information comprising the steps of:
providing an optical recording element comprising, in the following order, a light transmitting substrate a recording layer containing a metallized azo-ether dye according to this invention; and
focusing an information modulated laser beam on the recording layer thereby forming a pattern of different refractive indices in the element.

Representative azo-ether dyes of the invention are included within the general formula (I): 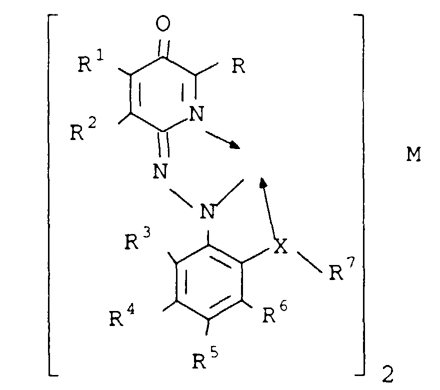 wherein;
R represents alkyl of 1 to 10 carbon atoms, amino, alkylamino, substituted or unsubstituted benzylamino;
R¹ represents hydrogen or alkyl of 1 to 6 carbon atoms;
R² and R⁴ each independently, represent, hydrogen, alkyl of 1 to 6 carbon atoms, halogen, SO₂R⁸ or SO₂NR⁹R¹⁰ wherein R⁸, R⁹ and R¹⁰, each independently, represent alkyl of 1 to 10 carbon atoms, substituted or unsubstituted benzyl, aryl of 6 to 10 carbon atoms or a heteroaryl of 5 to 10 carbon atoms;
R¹ and R² or R³ and R⁴, taken together with the atoms to which they are attached, may form an aromatic ring;
R³ and R⁶, each independently, represents hydrogen, alkyl of 1 to 4 carbon atoms or halogen;
R⁵ is an electron withdrawing group;
R⁷ represents alkyl of 1 to 6 carbon atoms, alkenyl of 3 to 6 carbon atoms, substituted or unsubstituted benzyl, aryl of 6 to 10 carbon atoms, heteroaryl of 5 to 10 carbon atoms, heteroarylmethyl of 6 to 10 carbon atoms or -(CH₂)ₙY wherein n is an integer from 1 to 5 and Y is a cyano or COOR⁸;
X represents oxygen or sulfur; and
M is a divalent metal ion.

The electron withdrawing groups for R⁵, are conventional negative Hammett sigma value groups disclosed in Lange's Handbook of Chemistry 14th edition, James A. Dean, McGraw-Hill, Inc., 9.1-9.7 (1992). Preferably, the electron withdrawing groups are nitro, cyano, SO₂R⁸ or SO₂NR⁹R¹⁰. R⁸, R⁹ and R¹⁰ are defined above.

In the descriptions above, hetero- refers to thienyl and furyl; aromatic ring refers to isoquinoline. Alkyl can be a straight or branched chain group having up to 10 carbon atoms, such as methyl, ethyl or isopropyl. Alkoxy can be, for example, ethoxy or butoxy. Aryl can be, for example, phenyl, aminophenyl or propionylaminophenyl. Heteroaryl can be 2-thienyl. Also, various substituents on the these groups are contemplated. For example, alkyl, aryl, heteroaryl, alkenyl group can be substituted with one or more alkoxy, alkoxycarbonyl, aryloxy, aryloxycarbonyl, carbamoyl, sulfamoyl, acylamino, sulfonylamino, halogen, ureido, hydroxy, carbamoyloxy, alkoxycarbonylamino, cyano, thiocyano or carboxy groups.

Various divalent metals are contemplated for M, illustrated above. Such divalent metals are copper, zinc or nickel, and others that are known to promote writability and a sufficient index of refraction.

The electron withdrawing groups for R⁵ are conventional negative Hammett sigma value groups disclosed in Lange's Handbook of Chemistry 14th edition, James A. Dean, McGraw-Hill, Inc., 9.1-9.7 (1992). Preferably, the electron withdrawing groups are nitro, cyano, SO₂R⁸ or SO₂NR⁹R¹⁰. R⁸, R⁹ and R¹⁰ are defined above.

Representative compounds within structure I are presented in Table I. In this table M represents nickel.

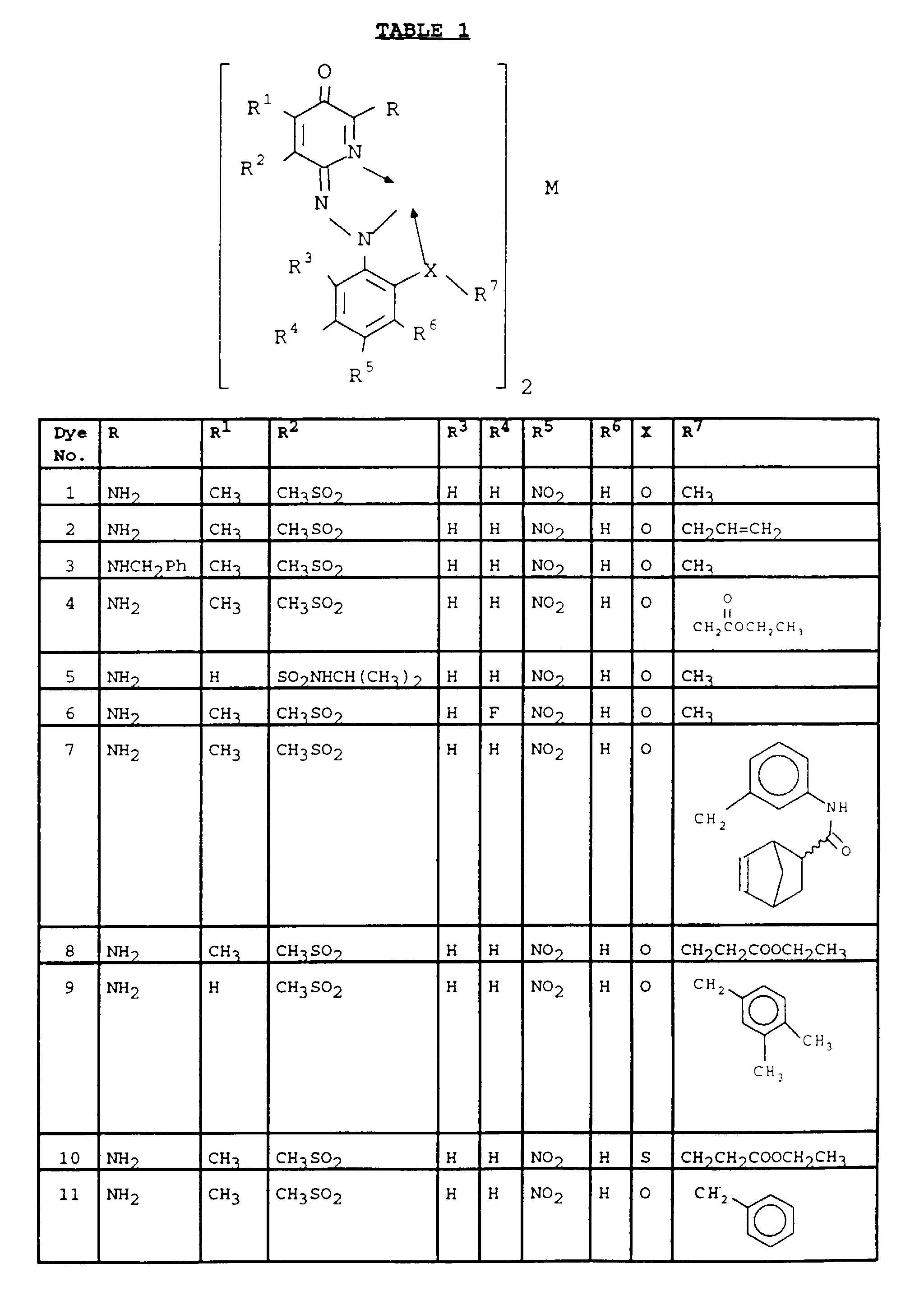

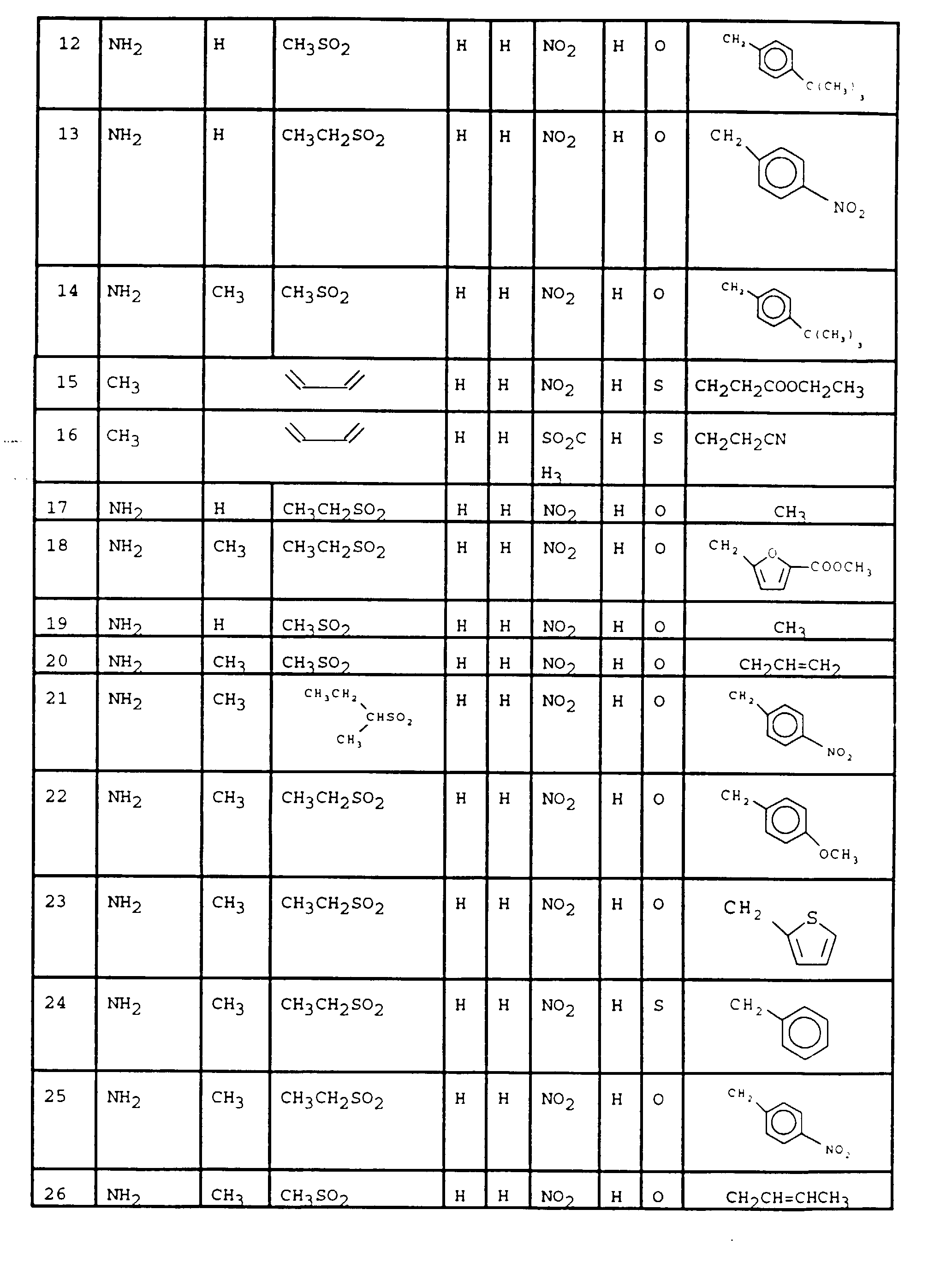

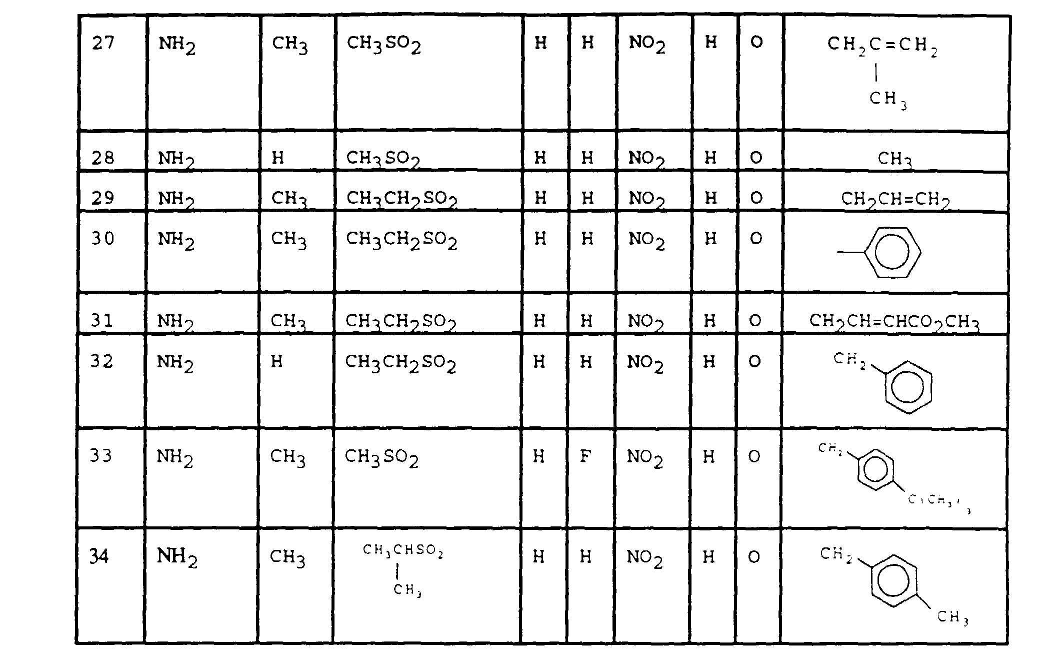

The dyes of the invention are prepared by first alkylating a 2-hydroxy-4-nitroaniline with the an organic halide having the R⁷ substituents defined above was carried out either in DMF or acetone using potassium carbonate as a base to form an alkoxy aniline derivative. The latter derivative is diazotized and coupled with a substituted 5-bromo-3-pyridinol. Bromine is displaced with sulfinate to form a 5-alkylsulfonyl-6-(2-alkoxy-phenylazo)-3-pyridinol. The latter is metallized with a divalent metal salt. The following example 1 is presented to illustrate the general method in more detail.

### Example 1

First, 2-hydroxy-4-nitroaniline (8g) was placed in a round bottom flask together with DMF (80ml), potassium carbonate (8.7g) and potassium iodide (0.1g) and the mixture heated at 80° with stirring. Benzyl chloride (3.5g) was added dropwise and heating continued for 4 hours. At the end of this time the mixture was added to ice and stirred vigorously. After the product solidified it was filtered off and washed with dilute sodium hydroxide solution followed by water. The nmr spectrum of the dried material was in accord with 2-benzyloxy-4-nitroaniline.

Next, the 2-benzyloxy-4-nitroaniline was diazotized with nitrosylsulfuric acid in a mixture of acetic and propionic acids. After 2 hours any excess nitrous acid was destroyed by the addition of urea and the diazo solution was added to a solution of 2-amino-5-bromo-3-hydroxy-4-methylpyridine(6g) in methanol (300ml.) containing sodium acetate (30g) below 5°. [a.k.a. coupling process] When dye formation was complete the solution was diluted with water and the product, 2-amino-6-(2-benzyloxy-4-nitrophenylazo)-5-bromo-3-hydroxy-4-methylpyridine filtered off.

The above bromo compound was dissolved in DMF (100ml) and treated with sodium methanesulfinate (2g) and the mixture stirred for five hours. The product was isolated by pouring the mixture into water containing sodium nitrate (20g) and filtering off the precipitated material. The dried dye material had an nmr spectrum in accord with the proposed structure.

The dye (was added to methanol (60mL) and nickel acetate (0.63g) added in portions with stirring while heating the solution at gentle reflux for 30 minutes. The solution was allowed to cool and the product filtered off. The absorption max in acetone was 613 nm and the extinction coefficient was 9.23 x 10⁴.

Other dyes of Table 1 were prepared using similar procedures except for compounds 8, 10, 15, 16 and 24. For these five compounds the first step the above described general procedure was altered. Instead the thioether and ether substituted amine compounds were prepared by procedures known to those skilled in the art and than subjected to the remaining steps of the generally described process.

The optical recording elements of the invention comprises a light transmitting, typically pregrooved substrate, with the metallized azo-ether dye recording layer overlaying the substrate and a light reflective layer overlaying the light absorptive layer. A protective layer overlays the light reflective layer. The preferred embodiment is that of a writable compact disc (CD). The write and read lasers are of the laser diode type and operate in the infrared region between 770 and 830 nm.

Recording is accomplished by focusing an information (alphanumeric or image) modified laser beam on the azo-ether dye recording layer. The result causes a pattern of change in the specular reflectivity of the element. This pattern constitutes the recorded information. This pattern, when scanned by the read laser, is seen as a pattern of reflectivity modulation that is converted back into the recorded information by playback electronics. For the preferred CD format, the element is written with a diode laser emitting between 775 and 800 nm and read with a diode laser emitting between 775 and 800 nm. With the CD format, it is preferred that the metallized azo-ether dye be selected so that the real part of the complex refractive index (N) of the unwritten light absorptive layer measured with 788 nm light source is not less than 1.8 and the imaginary part (k) is not greater than 0.15.

The substrate may be any transparent material that satisfies the mechanical and optical requirements. Generally, the substrate is pregrooved with groove depths from 20 nm to 250 nm, groove widths 0.2 to 1 µm and a pitch of 1 to 2µm. The preferred material is polycarbonate. Other useful materials include glass, polymethylmethacrylate and other suitable polymeric materials.

The preparation of the optical recording element of the invention is achieved by spin coating of the metallized azo-ether dye either by itself, or with other dye or dyes or with addenda from a suitable solvent onto a transparent substrate. For coating, the metallized azo-ether dye with or without addenda is dissolved in a suitable solvent so that the dye is 20 or less parts by weight to 100 parts of solvent by volume. The dye recording layer of the element is then overcoated with a metal reflective layer under reduced pressure by resistive heating or a sputter method and finally overcoated with a protective resin.

Coating solvents for the dye recording layer are selected to minimize their effect on the substrate. Useful solvents include as alcohols, ethers, hydrocarbons, hydrocarbon halides, cellosolves, ketones. Examples of solvents are methanol, ethanol, propanol, pentanol, 2,2,3,3-tetrafluoropropanol, tetrachloroethane, dichloromethane, diethyl ether, dipropyl ether, dibutyl ether, methyl cellosolve, ethyl cellosolve, 1-methyl-2-propanol, methy ethyl ketone, 4-hydroxy-4-methyl-2-pentanone, hexane, cyclohexane, ethylcyclohexane, octane, benzene, toluene, and xylene. Other less desirable solvents include water and dimethylsulfoxide. Preferred solvents are hydrocarbon solvents and alcohol solvents since they have the least effect on the preferred polycarbonate substrates. Mixtures of solvents can also be used.

The reflective layer can be any of the metals conventionally used for reflective layer in optical recording layers. Useful metals can be vacuum evaporated or sputtered and include gold, silver, aluminum, copper and alloys of such metals thereof.

The protective layer over the reflective layer is similarly conventional for this art. Useful materials include UV curable acrylates. For more information on protective layers see James C. Fleming's *Optical Recording in Organic Media: Thickness Effects,* Journal of Imaging Science, Vol. 33, No. 3, May/June 1989, pages 65-68.

The element of the invention can have prerecorded ROM areas as described in US-A-4,940,618. The surface of the substrate can have a separate heat deformable layer as described in US-A-4,990,388. Other patents relating to recordable CD type elements are US-A-5,009,818; US-A-5,080,946; US-A-5,090,009; US-A-4,577,291; US-A-5,075,147; and US-A-5,079,135.

The following examples demonstrate the utility of the dyes of the invention in optical recording elements.

### Examples 2-7

Optical discs for examples 2 to 7 were prepared according to the following procedure:

A featureless polycarbonate disc substrate having a thickness of 1.2 mm, an outer diameter of 120 mm and an inner diameter of 15 mm was made by injection molding.

To form the light absorptive layer 1 part by weight of the selected dye was dissolved in 40 parts of 2,2,3,3-tetrafluoropropanol by volume with stirring for 1 hour at room temperature. Then the solution was filtered through a 0.2 µ filter. The solution was coated on the surface of the substrate by spin coating to an overall optical density as shown in Table 2 at 671 nm. It was dried at 80° C for 15 minutes.

Then a gold reflective layer was deposited by resistive heating on the entire surface of the disc to about 1200 A thickness. A UV curable acrylate lacquer (D_{AICURE FD}-17™ from Dainippon Inc. Chemical) was applied by spin coating onto the gold layer to a thickness of 7 to 11 um. It was UV cured with an 'H' bulb using a fusion system cure at 3000W/inch power for 15 seconds.

To test the optical disc thus obtained, a test system consisting of an optical head with a 788 nm laser, a 0.5 NA lens, phase tracking and 1/2 aperture focusing was used. The optics used circularly polarized light to reduce laser feedback effects. Recording and play back were carried out with the same laser at 2.8 m/s rotational speed. The read power was kept at 0.6 mW. Single frequency was recorded with about 3.5 micron mark length at 18 mW write power, through 30 Kz filter, forming marks of lower reflectivity than the unmarked area when examined with a light source emitting at 788 nm light. When the marks were read the CNR (carrier signal to noise ratio) for the dyes is given in Table 2.

**TABLE 2**

| Example No. | Dye No. | Optical Density at 671nm | CNR (dB) at 2.8 meters/sec 18mW power |
|---|---|---|---|
| 2 | 1 | 1.56 | 62 |
| 3 | 2 | 1.46 | 59 |
| 4 | 3 | 0.89 | 51 |
| 5 | 4 | 1.50 | 59 |
| 6 | 14 | 1.35 | 60 |
| 7 | 8 | 1.29 | 38 |

## Claims

1. A metallized azo-ether dye comprising an azo group linking a substituted 3-hydroxy-pyridine nucleus to a phenyl nucleus wherein the phenyl nucleus has an alkoxy or thioether substituent at its 2-position.

2. A metallized azo-ether dye having the formula (I): 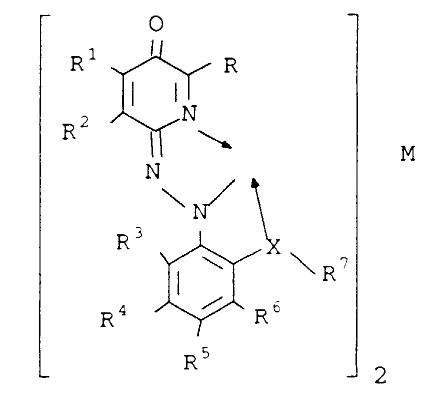 wherein;
R represents alkyl of 1 to 4 carbon atoms, amino, alkylamino, substituted or unsubstituted benzylamino;
R¹ represents hydrogen or alkyl of 1 to 6 carbon atoms;
R² and R⁴, each independently, represent, hydrogen, alkyl of 1 to 6 carbon atoms, halogen, SO₂R⁸ or SO₂NR⁹R¹⁰ wherein R⁸ R⁹ and R¹⁰, each independently, represent alkyl of 1 to 10 carbon atoms, substituted or unsubstituted benzyl, aryl of 6 to 10 carbon atoms or a heteroaryl of 5 to 10 carbon atoms;
R¹ and R² or R³ and R⁴, taken together with the atoms to which they are attached, may form an aromatic ring;
R³ and R⁶, each independently, represents hydrogen, alkyl of 1 to 4 carbon atoms or halogen;
R⁵ is an electron withdrawing group;
R⁷ represents alkyl of 1 to 6 carbon atoms, alkenyl of 3 to 6 carbon atoms, substituted or unsubstituted benzyl, aryl of 6 to 10 carbon atoms, heteroaryl of 5 to 10 carbon atoms, heteroarylmethyl of 6 to 10 carbon atoms or -(CH₂)ₙY wherein n is an integer from 1 to 5 and Y is a cyano or COOR⁸;
X represents oxygen or sulfur; and
M is a divalent metal ion.

3. The dye of claim 2 wherein:
R represents amino, methyl or aminomethylphenyl;
R¹ represents hydrogen or methyl;
R² represents methylsulfonyl, ethylsulfonyl, isopropylsulfamoyl or isopropylsulfonyl;
or R¹ and R² taken together with the atoms to which they are attached form a benzene ring;
R³ represent hydrogen;
R⁴ represent hydrogen, chlorine or fluorine;
R⁵ represents dicyanoethylidene, nitro or methylsulfonyl;
R⁶ represents hydrogen;
R⁷ represents methyl, allyl, methallyl, crotyl, benzyl, p-t-butyl-benzyl, p-tolyl, p-nitro-benzyl, p-methoxy-benzyl, 3,4-dimethyl-benzyl, 3-(norbornen-5-ylcarbonamido)benzyl, 2-ethoxycarbonylethyl, 3-ethoxycarbonylpropyl, ethyl 3-propionate, cyanoethyl, 2-methoxycarbonyl-5-furylmethyl, 2-thienylmethyl and phenyl;
X represents -O- or -S-; and
M represents nickel.

4. The metallized azo-ether dye of claim 2 selected from the dyes of the following Table:

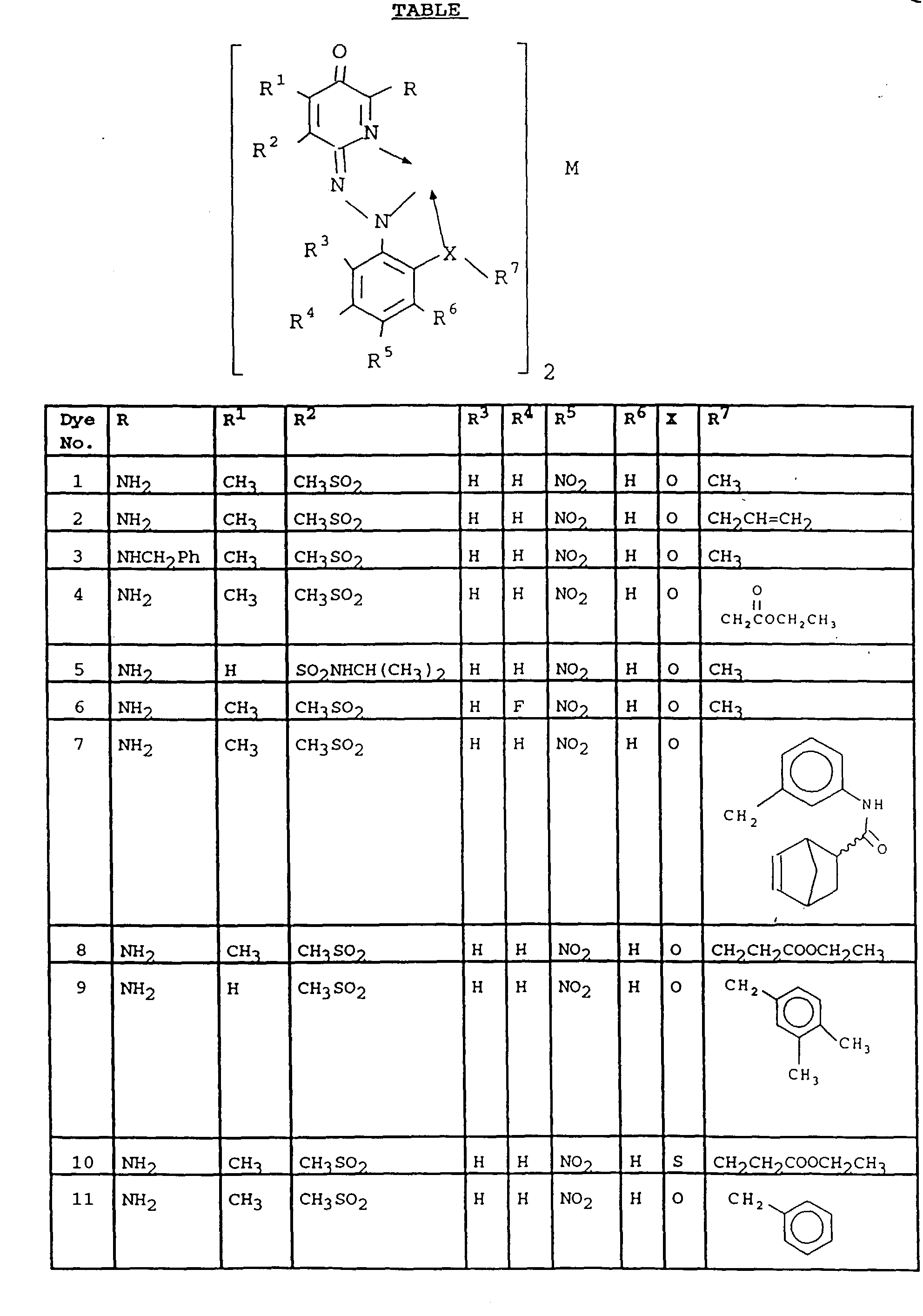

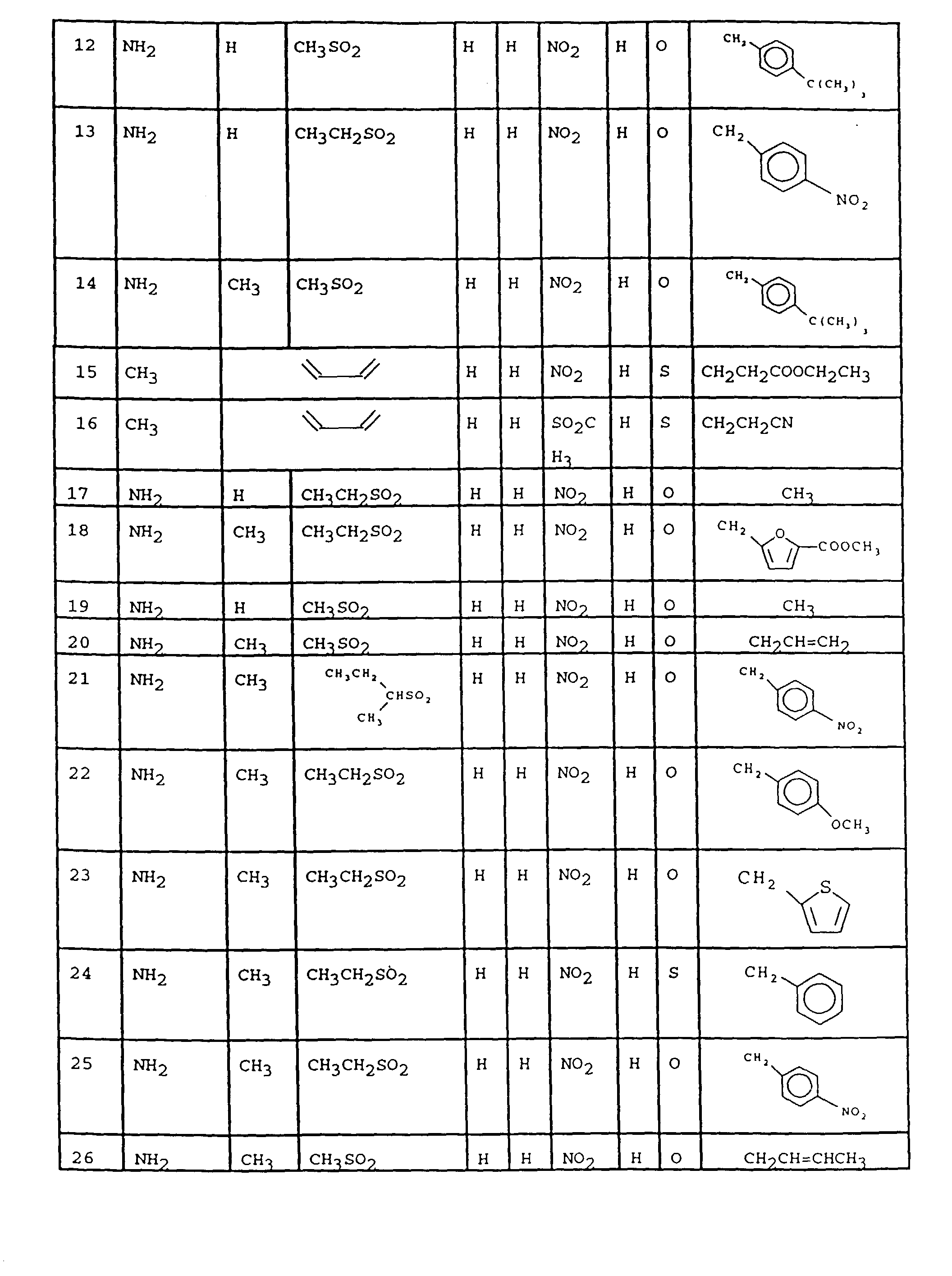

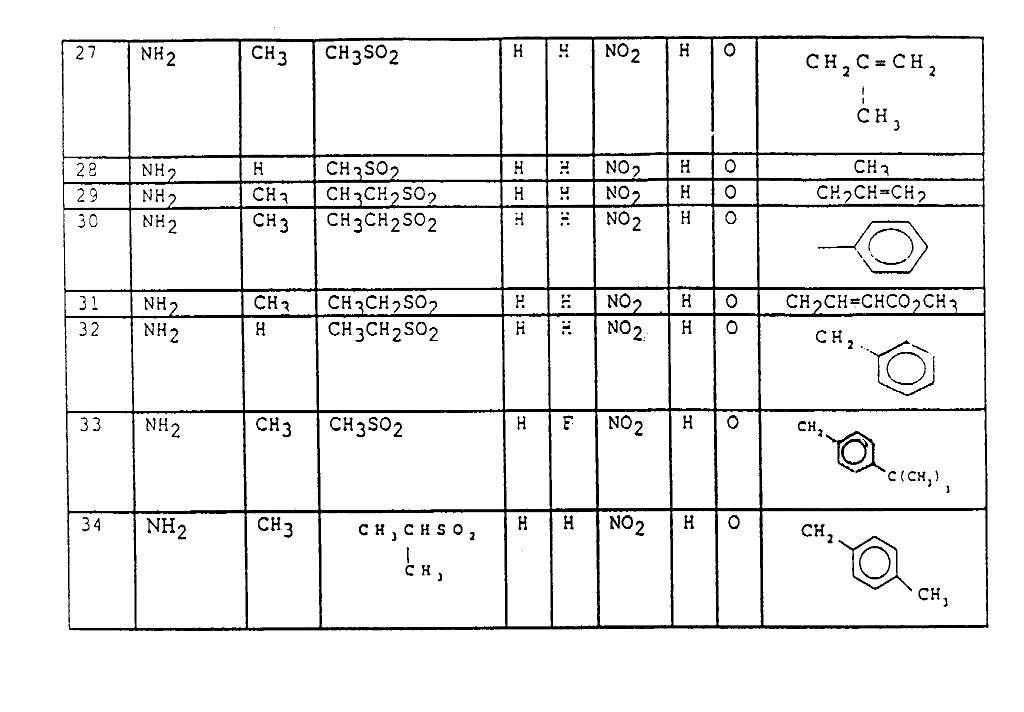

5. The metallized azo-ether dye of claim 4 selected from the group consisting of dyes 1, 4, and 14 of the Table in claim 4.

6. An optical recording element comprising, in the following order, a light transmitting substrate, a recording layer containing a dye and a light reflective layer wherein the dye is a metallized azo-ether dye according to any one of claims 1, 2, 3, 4 and 5.

7. A method for recording optical information comprising the steps of:
providing an optical recording element comprising, in the following order, a light transmitting substrate, a recording layer containing a dye and a light reflective layer wherein the dye is a metallized azo-ether dye as claimed in 1; and
focusing an information modulated laser beam on the recording layer thereby forming a pattern of different specular reflectivity in the element.

## Patentansprüche

1. Metallisierter Azoether-Farbstoff, der eine Azogruppe umfaßt, die einen substituierten 3-Hydroxypyridin-Ring mit einem Phenylring verknüpft, worin der Phenylring einen Alkoxy- oder Thioether-Substituenten an seiner Position 2 aufweist.

2. Metallisierter Azoether-Farbstoff mit der Formel (1): 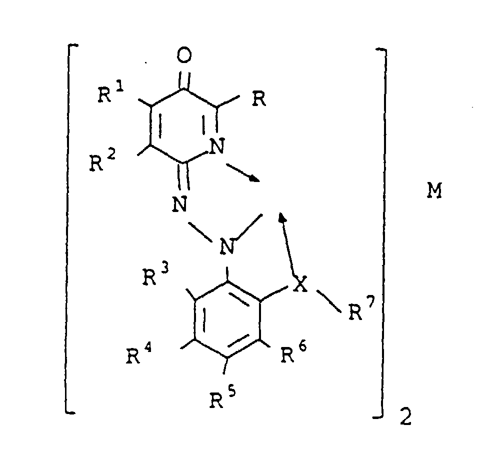 in der:
R Alkyl mit 1 bis 4 Kohlenstoffatomen, Amino, Alkylamino, substituiertes oder unsubstituiertes Benzylamino darstellt;
R¹ Wasserstoff oder Alkyl mit 1 bis 6 Kohlenstoffatomen darstellt;
R² und R⁴ jeweils unabhängig Wasserstoff, Alkyl mit 1 bis 6 Kohlenstoffatomen, Halogen, SO₂R⁸ oder SO₂NR⁹R¹⁰ darstellen, worin R⁸, R⁹ und R¹⁰ jeweils unabhängig Alkyl mit 1 bis 10 Kohlenstoffatomen, substituiertes oder unsubstituiertes Benzyl, Aryl mit 6 bis 10 Kohlenstoffatomen oder ein Heteroaryl mit 5 bis 10 Kohlenstoffatomen darstellen;
R¹ und R² oder R³ und R⁴ zusammen mit den Atomen genommen, an die sie geknüpft sind, einen aromatischen Ring bilden können;
R³ und R⁶ jeweils unabhängig Wasserstoff, Alkyl mit 1 bis 4 Kohlenstoffatomen oder Halogen darstellen;
R⁵ eine Elektronen-abziehende Gruppe ist;
R⁷ Alkyl mit 1 bis 6 Kohlenstoffatomen, Alkenyl mit 3 bis 6 Kohlenstoffatomen, substituiertes oder unsubstituiertes Benzyl, Aryl mit 6 bis 10 Kohlenstoffatomen, Heteroaryl mit 5 bis 10 Kohlenstoffatomen, Heteroarylmethyl mit 6 bis 10 Kohlenstoffatomen oder -(CH₂)ₙY darstellt, worin n eine ganze Zahl von 1 bis 5 ist und Y ein Cyano oder COOR⁸ ist;
X Sauerstoff oder Schwefel darstellt; und
M ein zweiwertiges Metallion ist.

3. Farbstoff nach Anspruch 2, worin:
R Amino, Methyl oder Aminomethylphenyl darstellt;
R¹ Wasserstoff oder Methyl darstellt;
R² Methylsulfonyl, Ethylsulfonyl, Isopropylsulfamoyl oder Isopropylsulfonyl darstellt;
oder R¹ und R² zusammen mit den Atomen genommen, an die sie geknüpft sind, einen Benzolring bilden;
R³ Wasserstoff darstellt;
R⁴ Wasserstoff, Chlor oder Fluor darstellt;
R⁵ Dicyanoethyliden, Nitro oder Methylsulfonyl darstellt;
R⁶ Wasserstoff darstellt;
R⁷ Methyl, Allyl, Methallyl, Crotyl, Benzyl, p-t-Butylbenzyl, p-Tolyl, p-Nitrobenzyl, p-Methoxybenzyl, 3,4-Dimethylbenzyl, 3-(Norbornen-5-ylcarbonamido)-benzyl, 2-Ethoxycarbonylethyl, 3-Ethoxycarbonylpropyl, Ethyl-3-propionat, Cyanoethyl, 2-Methoxycarbonyl-5-furylmethyl, 2-Thienylmethyl und Phenyl darstellt;
X für -O- oder -S- steht; und
M Nickel darstellt.

4. Metallisierter Azoether-Farbstoff nach Anspruch 2, der aus den Farbstoffen der folgenden Tabelle ausgewählt ist:

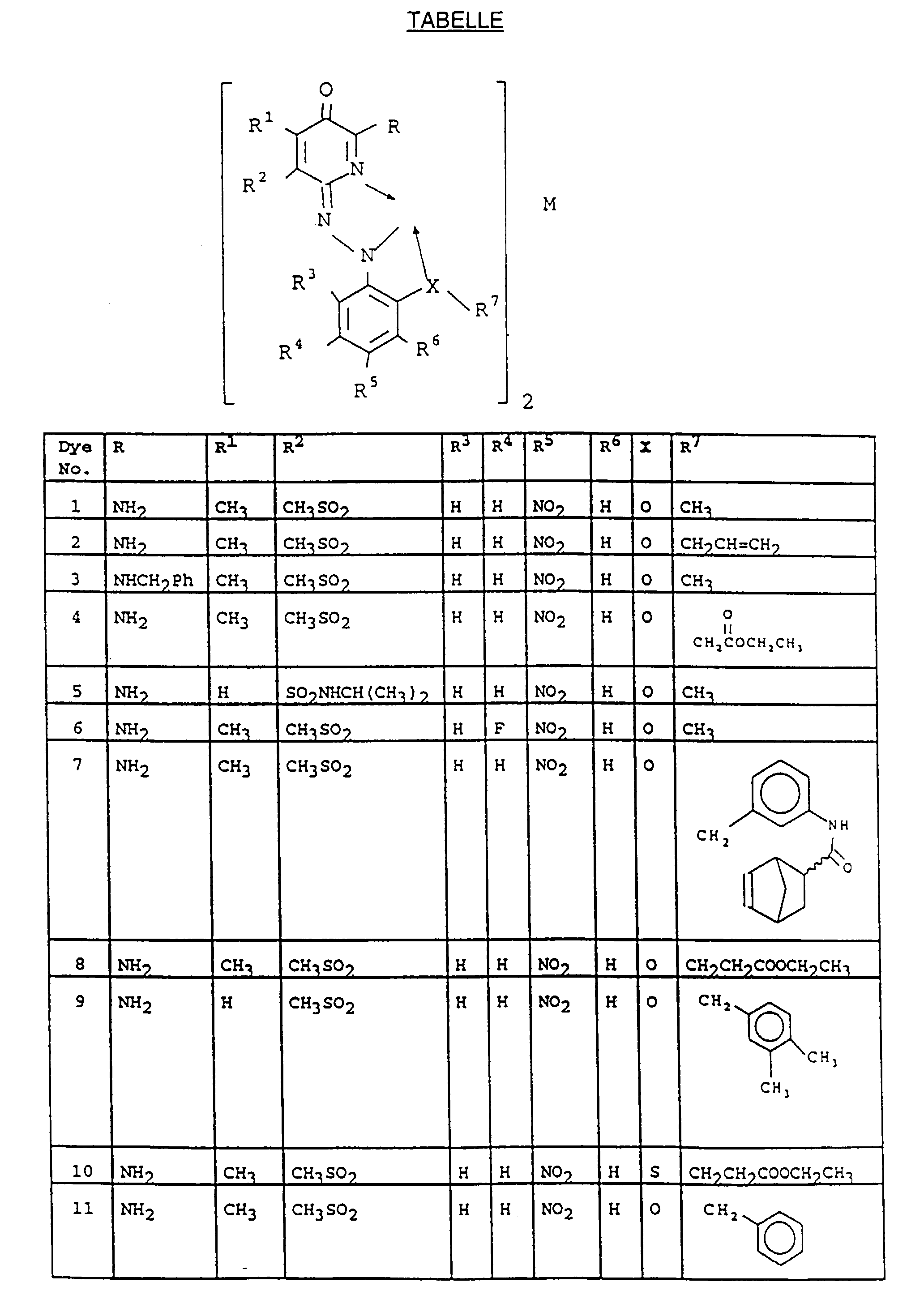

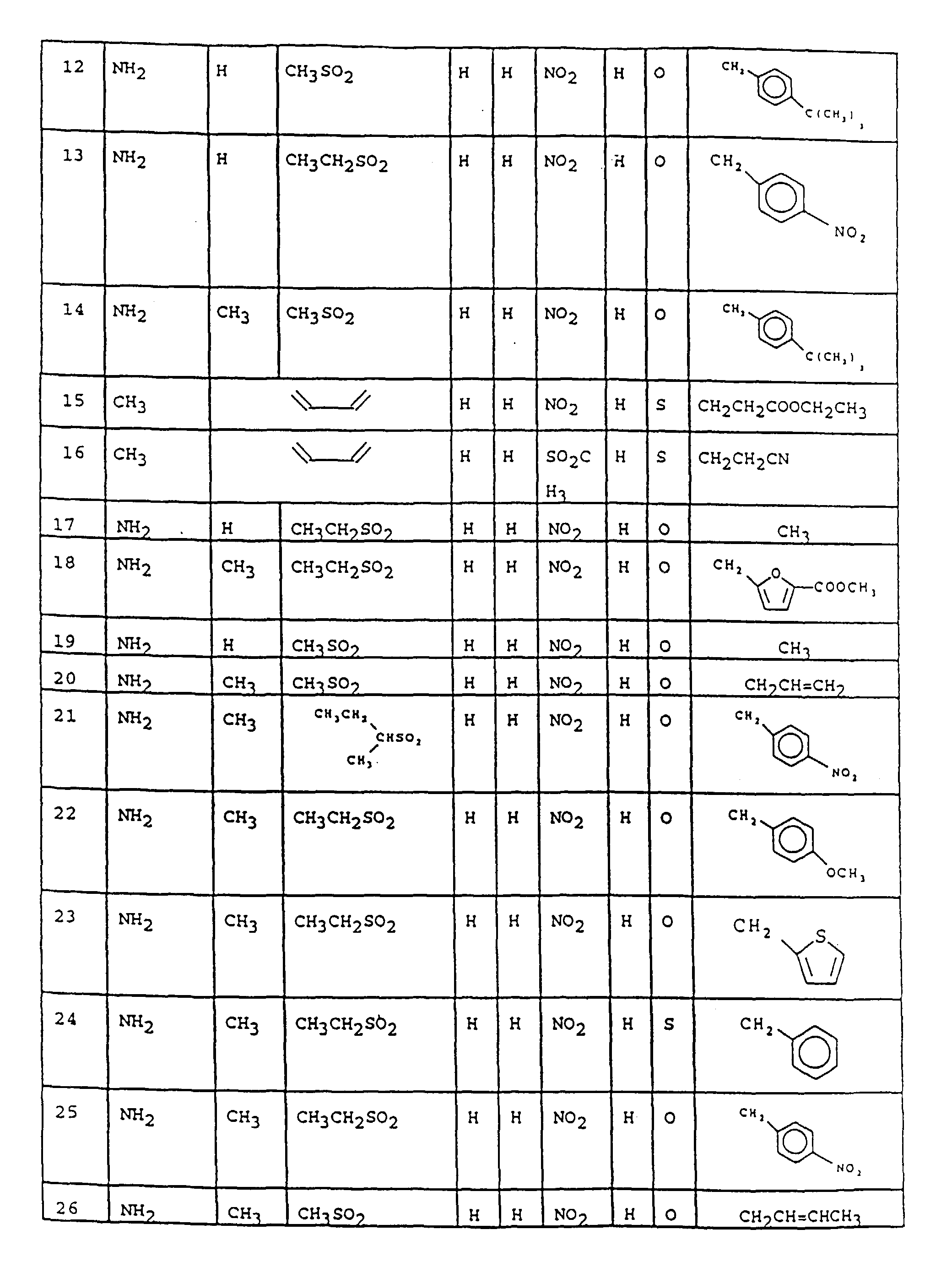

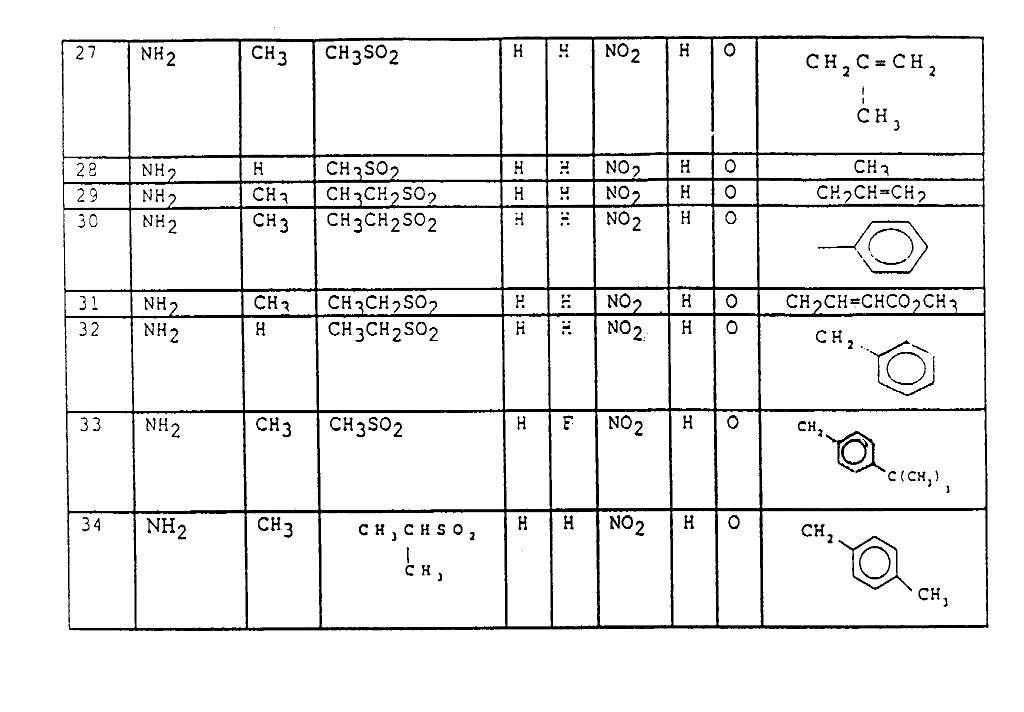

5. Metallisierter Azoether-Farbstoff nach Anspruch 4, der aus der Gruppe ausgewählt ist, die aus den Farbstoffen 1, 4 und 14 der Tabelle in Anspruch 4 besteht.

6. Optisches Aufzeichnungselement, umfassend in der folgenden Reihenfolge ein lichtdurchlässiges Substrat, eine Aufzeichnungsschicht, die einen Farbstoff enthält, und eine Licht reflektierende Schicht, wobei der Farbstoff ein metallisierter Azoether-Farbstoff nach irgendeinem der Ansprüche 1, 2, 3, 4 und 5 ist.

7. Verfahren zur Aufzeichnung von optischer Information, umfassend die Schritte: Bereitstellen eines optischen Aufzeichnungselementes, das in der folgenden Reihenfolge ein lichtdurchlässiges Substrat, eine Aufzeichnungsschicht, die einen Farbstoff enthält, und eine Licht reflektierende Schicht umfaßt, wobei der Farbstoff ein metallisierter Azoether-Farbstoff nach Anspruch 1 ist; und Fokussieren eines Informations-modulierten Laserstrahls auf der Aufzeichnungsschicht, wodurch ein Muster von unterschiedlichem Spiegelreflexionsvermögen in dem Element gebildet wird.

## Revendications

1. Colorant azo-éther métallisé comprenant un groupe azo reliant un noyau 3-hydroxy-pyridine substitué à un noyau phényle, où le noyau phényle comprend un substituant alcoxy ou thioéther en position 2.

2. Colorant azo-éther métallisé représenté par la formule (I) : 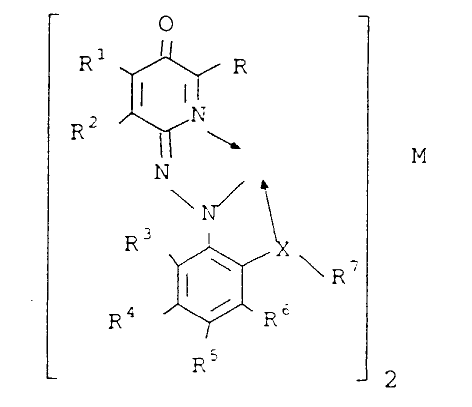 où :
R représente un groupe alkyle de 1 à 4 atomes de carbone, un groupe amino, alkylamino, benzylamino substitué ou non ;
R¹ représente l'hydrogène ou un groupe alkyle de 1 à 6 atomes de carbone ;
R² et R⁴ représentent chacun indépendamment l'hydrogène, un groupe alkyle de 1 à 6 atomes de carbone, l'halogène, un groupe SO₂R⁸ ou SO₂NR⁹R¹⁰, où R⁸, R⁹ et R¹⁰ représentent chacun indépendamment un groupe alkyle de 1 à 10 atomes de carbone, un groupe benzyle substitué ou non, aryle de 6 à 10 atomes de carbone ou hétéroaryle de 5 à 10 atomes de carbone ;
R¹ et R² ou R³ et R⁴, pris ensemble avec les atomes auxquels ils sont rattachés, peuvent former un cycle aromatique ;
R³ et R⁶ représentent chacun indépendamment l'hydrogène, un groupe alkyle de 1 à 4 atomes de carbone ou l'halogène ;
R⁵ est un groupe attracteur d'électrons ;
R⁷ représente un groupe alkyle de 1 à 6 atomes de carbone, alcényle de 3 à 6 atomes de carbone, benzyle substitué ou non, aryle de 6 à 10 atomes de carbone, hétéroaryle de 5 à 10 atomes de carbone, hétéroarylméthyle de 6 à 10 atomes de carbone ou -(CH₂)ₙY, où n est un entier de 1 à 5 et Y est un groupe cyano ou COOR⁸ ;
X représente l'oxygène ou le soufre ; et
M est un ion métallique divalent.

3. Colorant selon la revendication 2, dans lequel R représente un groupe amino, méthyle ou aminométhylphényle ;
R¹ représente l'hydrogène ou un groupe méthyle ;
R² représente un groupe méthylsulfonyle, éthylsulfonyle, isopropylsulfamoyle ou isopropylsulfonyle ; ou R¹ et R², pris ensemble avec les atomes auxquels ils sont rattachés, forment un cycle benzène ;
R³ représente l'hydrogène ;
R⁴ représente l'hydrogène, le chlore ou le fluor ;
R⁵ représente un groupe dicyanoéthylidène, nitro ou méthylsulfonyle ;
R⁶ représente l'hydrogène ;
R⁷ représente un groupe méthyle, allyle, méthallyle, crotyle, benzyle, p-t-butyl-benzyle, p-tolyle, p-nitro-benzyle, p-méthoxy-benzyle, 3,4-diméthylbenzyle, 3-(norbornène-5-ylcarbonamido)benzyle, 2-éthoxycarbonyléthyle, 3-éthoxycarbonylpropyle, éthyl 3-propionate, cyanoéthyle, 2-méthoxycarbonyl-5-furylméthyle, 2-thiénylméthyle et phényle ;
X représente -0- ou -S- ; et
M représente le nickel.

4. Colorant azo-éther métallisé selon la revendication 2, choisi parmi les colorants du tableau suivant :

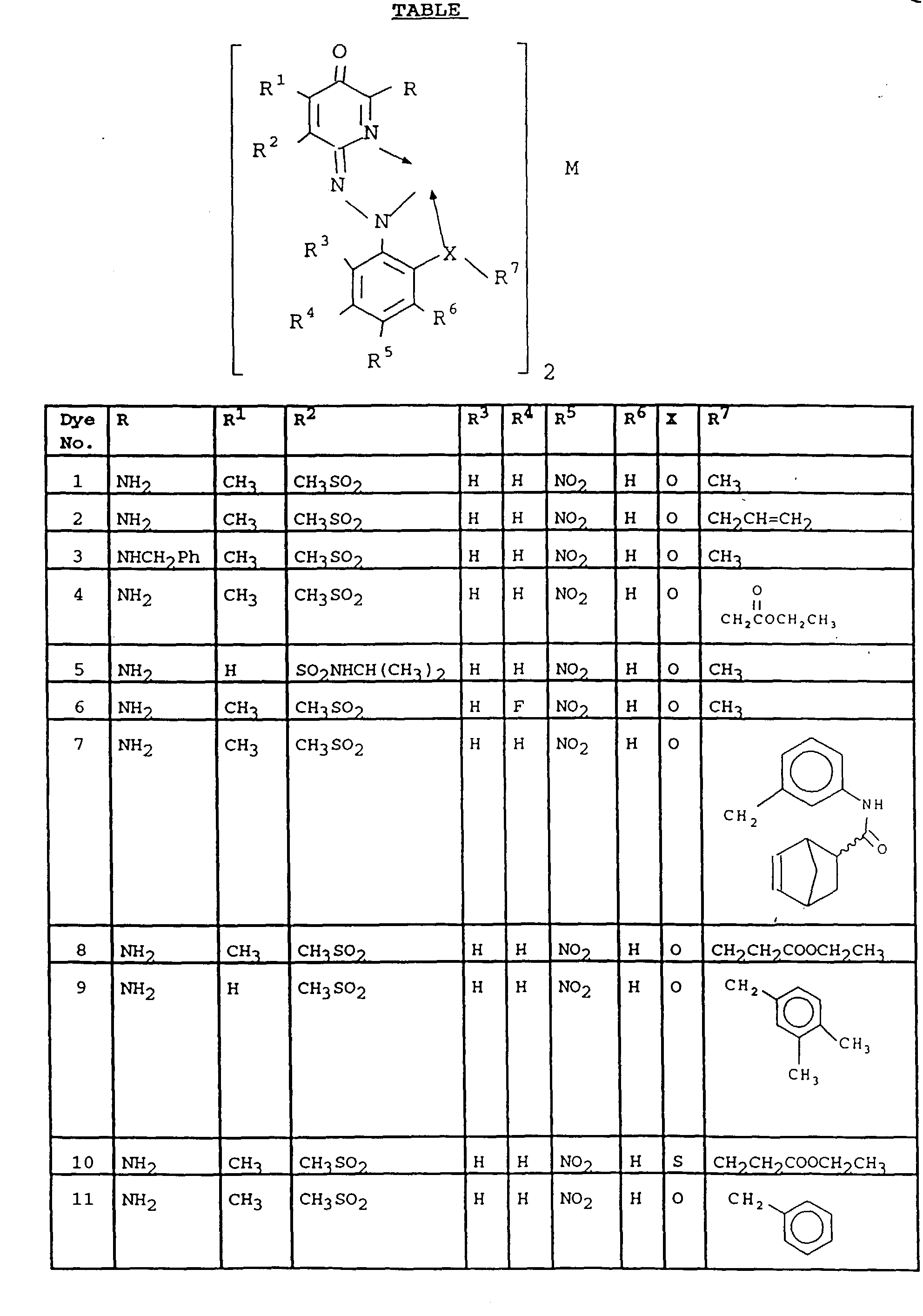

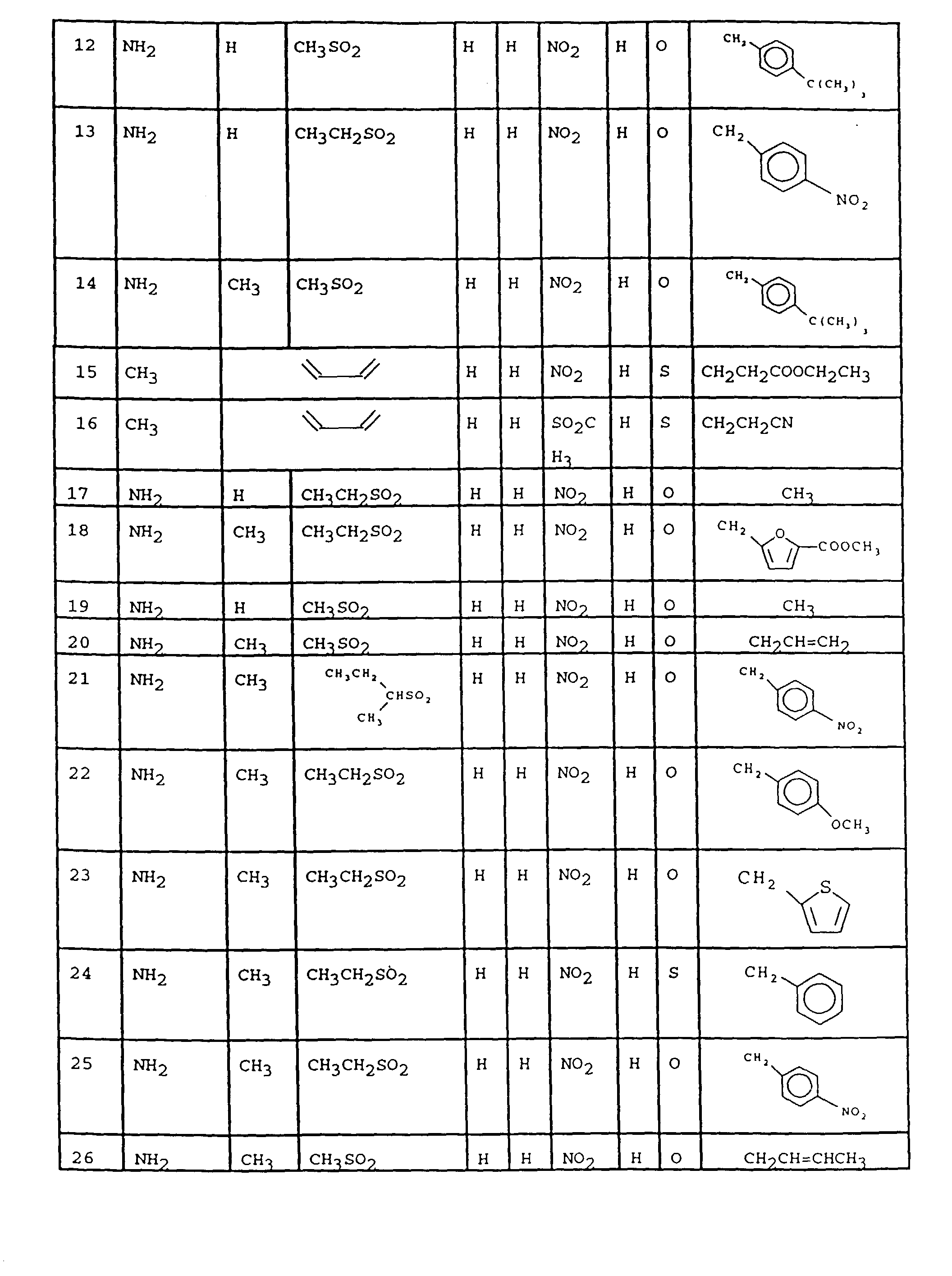

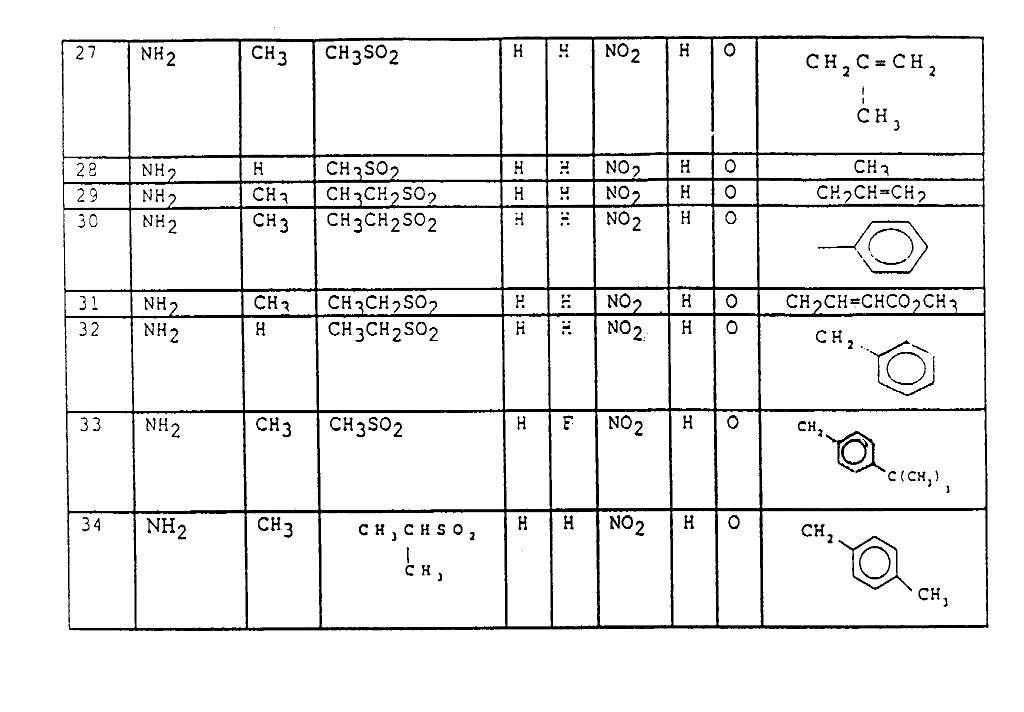

5. Colorant azo-éther métallisé selon la revendication 4 choisi parmi le groupe comprenant les colorants 1, 4 et 14 du tableau de la revendication 4.

6. Elément d'enregistrement optique comprenant, dans l'ordre suivant, un substrat transmettant la lumière, une couche d'enregistrement contenant un colorant et une couche réfléchissant la lumière, où le colorant est un colorant azo-éther métallisé selon l'une quelconque des revendications 1, 2, 3, 4 et 5.

7. Procédé d'enregistrement d'informations optiques comprenant les étapes suivantes :
former un élément d'enregistrement optique comprenant, dans l'ordre suivant, un substrat transmettant la lumière, une couche d'enregistrement contenant un colorant et une couche réfléchissant la lumière, où le colorant est un colorant azo-éther métallisé selon la revendication 1 ; et
focaliser un faisceau laser modulé par des informations sur la couche d'enregistrement, ce qui permet de former un motif de réflectivité spéculaire différente dans l'élément.
